**Europäisches Patentamt**

**European Patent Office**

**Office européen des brevets**

(11) Veröffentlichungsnummer: **0 395 064 A2**

# (12) EUROPÄISCHE PATENTANMELDUNG

(21) Anmeldenummer: **90107966.5**

(22) Anmeldetag: **26.04.90**

(51) Int. Cl.5: **G02F 3/00**

(30) Priorität: **27.04.89 SU 4687344**

(43) Veröffentlichungstag der Anmeldung:
**31.10.90 Patentblatt 90/44**

(84) Benannte Vertragsstaaten:
**AT BE CH DE FR GB IT LI NL SE**

(71) Anmelder: **TSENTR NAUCHNO-TEKHNICHESKOGO TVORCHESTVA MOLODEZHI " LINAX"**
**Ulitsa Marshala Govorova, 34**
**Leningrad(SU)**

(72) Erfinder: **Lomashevich, S.A.**
**Pargolovo, ulitsa Zavodskaya, 24, kv.7**
**Leningrad(SU)**
Erfinder: **Morozov, E.P.**
**ulitsa Serdobolskaya, 1, kv. 10**
**Leningrad(SU)**
Erfinder: **Semenova, G.A.**
**ulitsa Turku, 9, korpus 5, kv. 201**
**Leningrad(SU)**
Erfinder: **Bystrov, J.L.**
**prospekt 30-letia Pobedy, 30, kv. 160**
**Penza(SU)**

(74) Vertreter: **Sparing Röhl Henseler**
**Patentanwälte European Patent Attorneys**
**Rethelstrasse 123**
**D-4000 Düsseldorf 1(DE)**

(54) **Kommutator optischer Kanäle mit Verstärkung optischer Signale.**

(57) Der Erfindung liegt der Effekt der optischen Bistabilität zugrunde. Der Kommutator optischer Kanäle mit der Gesamtzahl optischer Kontakte von mehr als vier und mit Verstärkung optischer Signale enthält einen nichtlinearen Phasenmodulator (1), der sich in der Mitte eines Kreises befindet, der durch die Laser (2) gebildet wird. Die optischen Achsen der Laser verlaufen über das Zentrum des Kreises. Das Kommutieren erfolgt durch das Einschalten von Injektionsströmen einander gegenüberstehender Laser (2), die in derselben Achse liegen. Das Eingangssignal wird in einen optischen Leiter (10) gegeben und vermittels des kegelförmigen Gradans (11) an die Stirnseite des Phasenmodulators (1) weitergeleitet, der mit den Lasern (2) optische gekoppelt ist und deren Arbeit steuert.

FIG.4

## KOMMUTATOR OPTISCHER KANÄLE MIT VERSTÄRKUNG OPTISCHER SIGNALE

Die vorliegende Erfindung betrifft das Gebiet der Auswertung von Informationen, die durch optische Signale übertragen werden, so Vorrichtungen der Kommutation und Verstärkung optischer Signale durch Halbleiterstrukturen der optischen Logik.

Bekannt ist eine Vorrichtung (F. Tooley, S.D. Smith, C. Seaton, "High gain signal amplification in InSb transphasor at 77K". Appl. Phys. Lett. 43 Nr. 9, 807-808, 1983), in der ein Sättigungsabsorber innerhalb des Resonanzraumes untergebracht wird. Der "Transphaser" gestattet es, eine zweistellige Hysteresis-Abhängigkeit der Ausgangsleistung der optischen Strahlung in Abhängigkeit von der Eingangsleistung zu erzeugen. Aus der Hysteresis-Abhängigkeit des nichtlinearen Interferometers kann eine einstellige Charakteristik des Differenzialverstärkers gewonnen werden. Das Hauptelement dieser bistabilen optischen Kette ist ein Fabry-Perot-Interferometer, das durch zwei Flächen gebildet wird - durch Spiegel eines Halbleiterkristalls und durch das nichtlineare Medium, das das Halbleitermaterial selbst ist.

Der Transphaser ist klein (rund 200 um) und gestattet es, hohe Verstärkungsfaktoren (bis $10^4$) bei Mikrowattgrößenordnung des zu verstärkenden Signals zu erlangen. Aber dazu ist präzises Justieren zweier Strahlen erforderlich - des Aufpump- und des Signalstrahls in eine Richtung auf den Eingangsspiegel des Interferometers. Dies wie auch die Notwendigkeit der Anwendung kryogener Temperaturen schränken den Einsatzbereich des Gerätes auf Laborbedingungen zur Durchführung physikalischer Forschungen ein. Die Notwendigkeit des Einsatzes einer äußeren Quelle zum Pumpen der optischen Strahlung ist auch ein Mangel dieser Vorrichtung.

Von bekannten Vorrichtungen ist das ,"Optische Multiresonator-Gerät" (USA Patent Nr. 4.622.671) seinem technischen Wesen nach der vorliegenden Vorrichtung besonders nah. Dieser Multiresonator enthält zwei Sektionen einer halbleitenden Laser-Diode, die entsprechend die erste und die zweite Aktivschicht aufweisen. Beide Sektionen sind in beiden Richtungen über abgespaltene Flächen miteinander verbunden. Von großer Bedeutung ist, daß die Brechungsindices der Sektionen durch entsprechende Vorrichtungen geregelt werden. Zu den Vorteilen des Geräts gehören die Möglichkeit der Verstärkung optischer Signale, die Möglichkeit der Steuerung der Ausgangscharakteristik aufgrund des Effekts der optischen Bistabilität und das Mehrfrequenzregime.

Zu den Mängeln der Vorrichtung gehören der niedrige (bis $10^2$) Verstärkungsfaktor, beträchtlicher Pegel des Eingangssignals (bis 30 $\mu$W) und das Vorhandensein von nur zwei Eingangskontakten.

Der Erfindung liegt die Aufgabe zugrunde, den Verstärkungskoeffizient, die Sensibilität und die Zahl optischer Kontakte -Ein- und Ausgänge für optische Signale - zu erhöhen.

Diese Aufgabe wird durch die Merkmale des Patentanspruchs gelöst.

Auf diese Weise gestattes es die zusätzliche Einführung des Phasenmodulators und der Halbleiterlaser, die mit dem Phasenmodulator über das Fabry-Perot-Interferometer optisch gekoppelt sind, welcher durch die Innenspiegel dieser Laser und den nichtlinearen Phasenmodulator gebildet wird, der Vorrichtung neue Eigenschaften zu verleihen, die sich von den Eigenschaften der im Stand der Technik bekannten Vorrichtungen unterscheiden, und zwar:

1. Die Möglichkeit der Verstärkung optischer Signale in einem Verstärker, der aus zwei entgegengesetzten Lasern und einem Phasenmodulator besteht, durch die Nutzung des Effekts der optischen Bistabilität.

2. Die Erhöhung der Sensibilität, d.h. eine bedeutende Senkung des Intensitätspegels des Eingangssignals. Das läßt sich dadurch erklären, daß sich nichtlineare Veränderungen des Mediums des Modulators erst beim Nähern zu einem gewissen Wert (Schwellenwert) der optischen Leistung bemerkbar machen. Das überschreiten dieser Schwelle kann durch die resonanzbedingte Steigerung der Intensität infolge der Einführung eines Signals in das Interferometer, das durch die Innenspiegel der Laser gebildet wird, leichter erreicht werden. Die Charakteristik nach beliebiger optischen Achse erfolgt über das Fa bry-Perot-Interferometer, was es gestattet, die Schwellenwerte der nichtlinearen Effekte des Mediums bei geringeren Werten der Leistung zu überschreiten, mit der der Phasenmodulator beaufschlagt wird. Andererseits werden die zu verstärkenden Signale in der angemeldeten Vorrichtung auch über äußere Spiegel durch einen Laser gegeben. Das Abreißen der Laser in das Regime der kohärenten Strahlung und die drastische Erhöhung der Intensität im Interferometer werden vom Eingangssignal stimuliert, das zuerst vom Laser "aufgegriffen" wird und weiter auf den Phasenmodulator wirkt.

3. Die Erhöhung der Zahl der optischen Kontakte, d.h. der Ein- und Ausgänge, bis zu zwei Paaren. Das ist durch die Konstruktion der Vorrichtung bedingt - durch das Vorhandensein optischer Achsen mit gleichbedeutenden Funktionen.

4. Die Erhöhung der Zahl der Wellenlängen der Ausgangsstrahlung auf 8-10 durch den Einsatz an jeder optischen Achse der Ausgangsstrahlung zweier stromgesteuerter Laser, die ein Paar gekoppelter Resonatoren bilden, die es gestatten, die Strahlung auf diskreten Wellenlängen in einem gewissen Wellenbereich mit einer Breite von 150 Å zu generieren. Der Umbau erfolgt durch die Änderung der Injektionsstromwerte.

5. Die Möglichkeit des Kommutierens optischer Kanäle mit einer intensiven Auskopplung zwischen den Kanälen (bis 100 dB). Das Kommutieren erfolgt durch das Einschalten von Injektionsströmen der entgegengesetzten Laser, die in ein und derselben Achse liegen. Die intensive Auskopplung wird durch die starke Absorption der Strahlung im Halbleitermaterial beim Abschalten der Injektionsströme der Laser in den geschlossenen Kanälen gewährleistet.

Die Erfindung wird anhand von Ausführungsbeispielen und der Zeichnungen erläutert

Fig. 1 stellt den angemeldeten Kommutator optischer Kanäle mit zwei optischen Achsen dar;

Fig. 2 stellt eine Variante einer optisch integralen Vorrichtung mit Breggowschen Spiegeln 3 und 4 und mit Steuerelektroden 5, 6 und 7 dar;

Fig. 3 zeigt eine Kommutationsmatrix mit Verstärkung optischer Signale, in der der Kommutator optischer Kanäle mit Verstärkung optischer Signale als elementarste Zelle genommen wurde;

Fig. 4 zeigt einen sternförmigen Kommutator optischer Kanäle mit Verstärkung optischer Signale (Schnitt AA);

Fig. 5 zeigt die Integralvariante des Kommutators;

Fig. 6 zeigt die Charakteristik des Fabry-Perot-Interferometers, nämlich die Abhängigkeit der Transmission T vom Wert der Pumpstrahlung $I_R$.

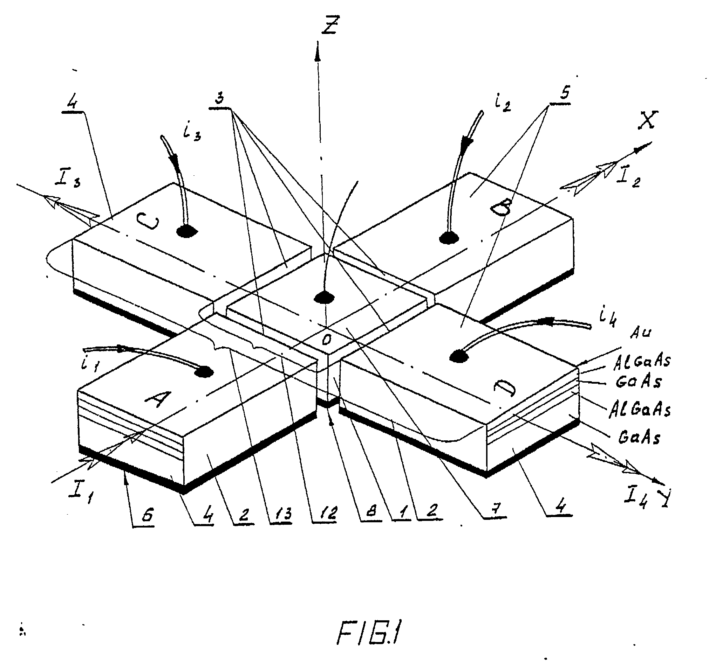

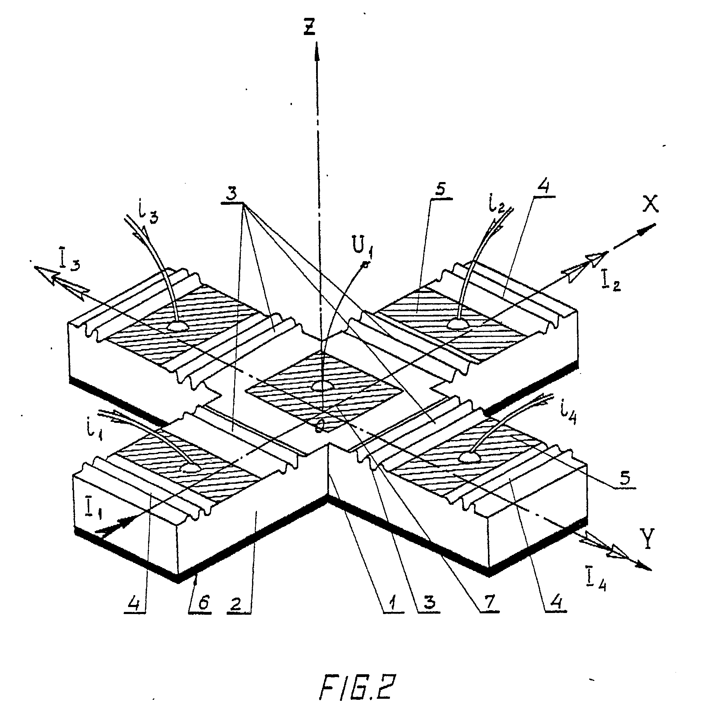

Die Vorrichtung gemäß Fig. 1 weist zwei optische Achsen auf und umfaßt den nichtlinearen Phasenmodulator 1, vier Halbleiterlaser 2, von denen sich zwei in der optischen Achse OX und die anderen beiden in der Achse OY befinden, die zu der ersten senkrecht verläuft. Alle Laser sind durch das gemeinsame Steuerungs-Fabry-Perot-Interferometer 12, das durch die Innenspiegel 3 der Laser 2 gebildet wird, miteinander gekoppelt.

Die äußeren Spiegel 4 der Laser bilden zwei äußere sogenannte "große" (im Unterschied zu den durch die Spiegel 3 gebildeten Laserresonatoren) Resonatoren 13 der Vorrichtung mit gegenseitig senkrechten optischen Achsen OX, OY.

Über die elektrischen Kontakte 5 und 6 werden Träger in die Lasterstrukturen injiziert. Über die Kontakte 7 und 8 wird Spannung auf den Phasenmodulator 1 gegeben. Der Koeffizient der Transmission $T_1$ der Innenspiegel 3 der Laser ist größer als der Koeffizient der Transmission $T_2$ der Außenspiegel 4 der Laser, oder beide sind gleich.

Zwecks besserem Verständnis der Arbeitsweise der Vorrichtung sei auf einige Aspekte der Bistabilität verwiesen, die das Arbeitsregime sowie Eigenschaften der angemeldeten Vorrichtung in vieler Hinsicht bestimmt.

Experimente haben gezeigt, daß das anfängliche Stimmen des Fabry-Perot-Interferometers die Art der Charakteristik "Intensität der Ausgangsstrahlung als Funktion der Lichtintensität am Eingang" vorausbestimmt. Bei der Änderung des Verstimmungswinkels des Resonators von 0 bis 1,0 (in Einheiten der Resonatorperiode) werden die zweistellige Hysterese-Charakteristik und die Charakteristik der Differentialverstärkung konsequenz realisiert. Die erste sorgt für das optische Speichern und die zweite für die Verstärkung optischer Signale.

Die Verstärkung optischer Signale beruht in der Vorrichtung ebenfalls auf dem Effekt der optischen Bistabilität - auf den Sprung-Charakter der Übergänge von einem Zustand in den anderen beim Überschreiten des Schwellenwertes der Ausgangsleistung. Theoretisch weisen die Sprungcharakteristika unendliche Steilheit auf, die physikalisch dadurch erklärt werden kann, daß der Effekt der optischen Bistabilität einen thermodynamischen Phasenübergang darstellt. Daher sind in der Praxis "Licht-Licht"-Charakteristika mit großer Steilheit und großen Verstärkungskoeffizienten möglich. Das wird experimentell bestätigt. Erzielt wurde ein Verstärkungskoeffizient optischer Signale von $10^4$.

Die Vorrichtung funktioniert folgendermaßen. Zunächst wird mit Hilfe der Laserströme $i_1$-$i_4$ ein Zustand geschaffen, bei dem die gesamte Lichtintensität im Phasenmodulator 1 unterhalb der Intensität liegt, die für die Auswirkung nichtlinearer Eigenschaften des Mediums erforderlich wäre. Das bedeutet, daß das Medium des Phasenmodulators 1 nicht aufgehellt ist und das steuernde Fabry-Perot-Interferometer 12 wie auch die beiden "großen" Resonatoren 13 verstimmt sind.

Beim Geben eines optischen Signals auf einen beliebigen Eingang (z.B. auf den Eingang des Lasers A) nimmt die optische Leistung sowohl innerhalb des Resonators des Lasers 2, auf dessen Außenspiegel 4 das Signal gegeben wurde, als auch innerhalb des Steuerungsinterferometers zu. Das führt zu einer beträchtlichen Steigerung der optischen Leistung innerhalb des Steuerungsinterferometers 1, zur Herstellung der nichtlinearen Abhängigkeit des Brechungsindexes von der Lichtintensität, zur Resonanzstimmung und zum Übergang in den Zustand des völligen Aufhellens. Dabei geraten die "großen" Resonatoren 13 der Vorrichtung in Resonanz, so daß optische Moden im Raum zwischen den Außenspiegeln 4 hergestellt werden. Das mit Hilfe der Strahlung der Laser 2 verstärkte optische Signal wird von den Ausgängen B, C und D in Richtung der optischen Achsen OX und OY abgestrahlt.

Möglich ist auch die Verstärkung optischer Signale ohne Umschalten auf einen anderen Kanal, indem die Laser 2, die in der optischen Achse liegen, die nicht mit der Richtung der Signalausbreitung übereinstimmt, vom elektrischen Strom abgeschaltet werden.

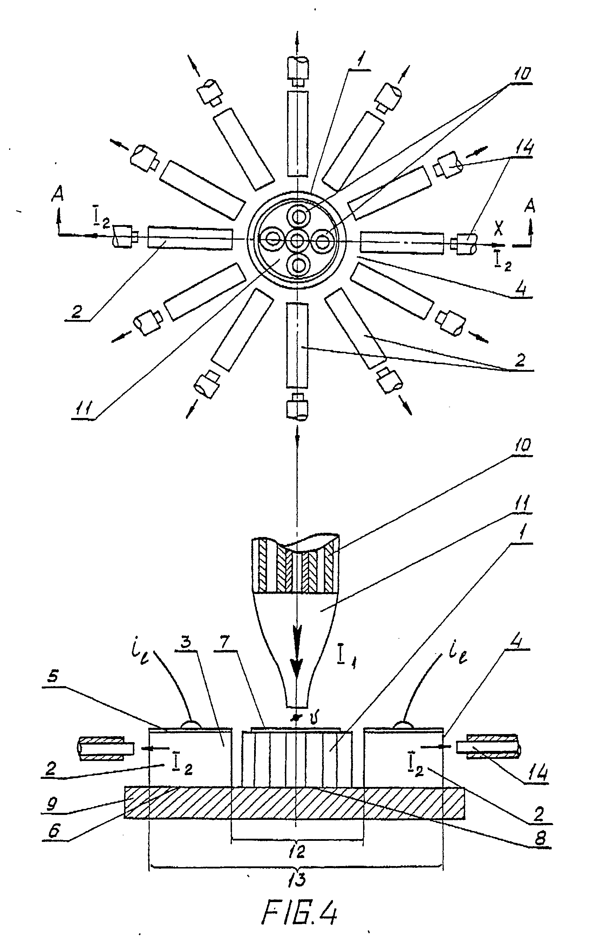

Ein allgemeiner Fall der erörterten Variante des Kommutators mit vier optischen Kontakten ist ein sternförmiger Kommutator mit Verstärkung optischer Signale (Fig. 4) mit n optischen Achsen (wo $n \geq 1$ ist).

Die Vorrichtung enthält den nichtlinearen Phasenmodulator 1 und 2n Halbleiterlaser 2, die sich in n optischen Achsen OX befinden.

Die Laser werden mit Innenspiegeln 3 und Außenspiegeln 4 ausgeführt. Die Vorrichtung sieht ferner das Vorhandensein der transparenten Elektrode 7 des Modulators 1 und der oberen Elektroden 5 der Laser vor.

Die Laser 2 und der Phasenmodulator 1 liegen auf der unteren Elektrode 9, die zugleich eine Wärmesenke bildet. Die Vorrichtung enthält ferner den Gradan 11, den optischen Leiter 10 und die Ausgangsleiter 14. Die Innenspiegel 3 der Laser 2 mit dem Phasenmodulator 1 bilden das Fabry-Perot-Interferometer 12. Die Laser 2 mit den Spiegeln 3 und 4 sowie der Phasenmodulator 1 bilden den "Großen Resonator" 13.

Die Vorrichtung funktioniert folgendermaßen (Fig. 4). Das Eingangssignal kommt über den Gradan 11 in den Phasenmodulator 1. Im Ausgangszustand sind einander gegenüberstehende Laser 2 eingeschaltet, an deren Ausgängen das erforderliche optische Signal erzeugt werden soll.

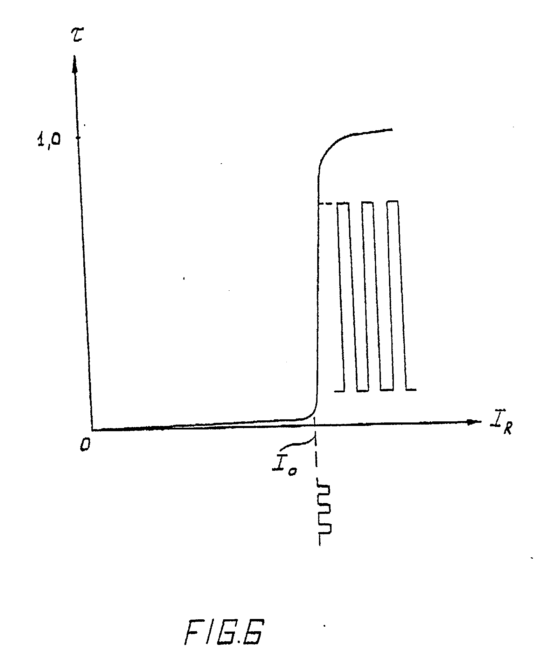

Betrachten wir die Arbeit der Vorrichtung im Betriebszustand, bei dem die Laser auf dem AA-Durchmesser eingesetzt werden. Der Wert der Injektionsströme in den Lasern wird so gewählt, daß der Pegel der von ihnen erzeugten Leistung für das Aufhellen des Fabry-Perot-Interferometers des Phasenmodulators 1 wie auch für das Zustandekommen des Effekts der optischen Bistabilität nicht ausreicht. In diesem Zustand liegt der Wert der Lichtintensität innerhalb des Interferometers 12 unter dem Schwellenwert, bei dem durch das nichtlineare Zusammenwirken des Mediums des Phasenmodulators mit der Strahlung das Aufhellen erfolgt. Dabei ist der Gesamtwert der Leistung der Laser geringer als der Schwellenwert 1 (Fig. 6), der Grad der Transmission ist gering. Experimentell wurde festgestellt, daß das anfängliche Stimmen des Fabry-Perot-Interferometers die Art der Charakteristik "Intensität der Ausgangsstrahlung als Funktion der Lichtintensität am Eingang" vorausbestimmt. Bei der Änderung des Verstimmungswinkels des Resonators von 0 bis 1,0 (in Einheiten der Resonatorperiode) werden die zweistellige Hysterese-Charakteristik und die Charakteristik der Differentialverstärkung konsequent realisiert. In der Vorrichtung wird mit Hilfe der Stimmung, die durch eine Spannung U an den Elektroden des Phasenmodulators 1 erfolgt, die Charakteristik der Verstärkung gewählt (Fig. 6).

Das Eingangssignal, das in den Phasenmodulator 4 kommt, ist eine erforderliche Ergänzung der Leistung der Laser 2. Das Signal gestattet es, den Schwellenwert der Intensität zu überschreiten und das Fabry-Perot-Interferometer 12 so aufzuhellen, daß dessen Transmissionsvermögen drastisch erhöht wird. Das führt zugleich zum Aufhellen des Mediums des "großen" Resonators 13, der die Resonatoren der Laser 2 und das Interferometer 12 vereint. Die optischen Moden werden im Raum des "großen" Resonators hergestellt, was sich auf die Erzeugung großer ($\approx 10^4$) Koeffizienten der Verstärkung der Ausgangssignale auswirkt - das verstärkte Signal wird in die Ausgangsfasern 14 ausgestrahlt. Die Arbeitsweise der Vorrichtung kann kurz so dargestellt werden: Das Signal, das in den Phasenmodulator 1 gelangt, führt dazu, daß sowohl das Fabry-Perot-Interferometer 12 als auch der "große" Resonator 13 in Resonanz gestimmt werden. Das führt zur jähen Intensivierung der Ausgangsstrahlung. Beim Ausschalten des Eingangssignals kehrt das System in den Ausgangszustand zurück.

Für die Einschätzung der eventuellen Zahl der Laser soll man folgendes berücksichtigen:

1. Der Abstand zwischen den Innenspiegeln der Laser entlang der Kreislinie des Modulators soll so gewählt werden, daß die optische Kopplung zwischen den streifenförmigen Wellenleitern der nächsten Laser ausgeschlossen wird. Bei der Breite des streifenförmigen Wellenleiters von rund 5 $\mu$m sollen die Innenspiegel auf etwa 10 $\mu$m -zehn Wellenlängen der genutzten Strahlung - voneinander entfernt sein.

2. Der Radius des Phasenmodulators bestimmt letztendlich die eventuelle Zahl der Laser. Dabei erfolgt die optische Verbindung zwischen den Lasern mit Hilfe des zylindrischen Phasenmodulators, der zugleich auch eine Fokussierungslinse für die Laserstrahlung ist.

Experimentell wurde festgestellt, daß nichtlineare Fabry-Perot-Interferometer bei Pumpleistungen von 5-10 mW, also bei realen Leistungen von Halbleiterlasern, 100 bis 200 $\mu$m groß sind.

Unter Berücksichtigung des Obengenannten ist der optimale Radius des Phasenmodulators rund 100 $\mu$m. Als Material dafür können beliebige nichtlineare Halbleiter- oder Dielektrikkristalle mit einem Koeffizient der Strahlungsabsorption von 1-10 verwendet werden. Der Radius des Plazierens der Innenspiegel 3 (Fig. 4) darf 200 $\mu$m nicht überschreiten. Bei einer 10-$\mu$m-Entfernung zwischen

den Innenspiegeln der Laser entlang der Kreislänge und bei einer Breite dieser Spiegel von zum Beispiel 10 μm können mehr als 50 Laser installiert, also schätzungsweise mehr als 50 optische Kontakte geschaffen werden. Durch die Wahl des Materials für den Phasenmodulator kann sich diese Kennziffer erhöhen bzw. verringern.

Der Kommutator optischer Kanäle mit Verstärkung optischer Signale kann als elementarste Zelle für den Aufbau von Kommutationsmatrizen oder Feldern großer Dimension verwendet werden.

Fig. 3 zeigt das Schema einer vollzugänglichen Kommutationmatrix mit zwölf optischen Kontakten, in der jeder der neun Phasenmodulatoren ($\emptyset_1$-$\emptyset_9$) von vier Lasern umringt ist. Das gestattet es, nicht nur Kanäle umzuschalten, sondern auch optische Signale zu verstärken. Als Beispiel wird auf dem Schema die Variante des Umschaltens des optischen Signals von $A_1$ auf $C_1$ genommen. Eingang $A_1$ -$\emptyset_2$ - $\emptyset_9$ - $\emptyset_1$ - $\emptyset_5$ - $\emptyset_6$ - Ausgang $C_1$. Alles andere ist abgeschaltet. Auf ähnliche Weise kann auch eine Kommutationsmatrix für optische Kanäle mit Verstärkung optischer Signale beliebiger Dimension aufgebaut werden.

Nachstehend folgen Hinweise zu Technologien für die Herstellung verschiedener Varianten der angemeldeten Vorrichtung.

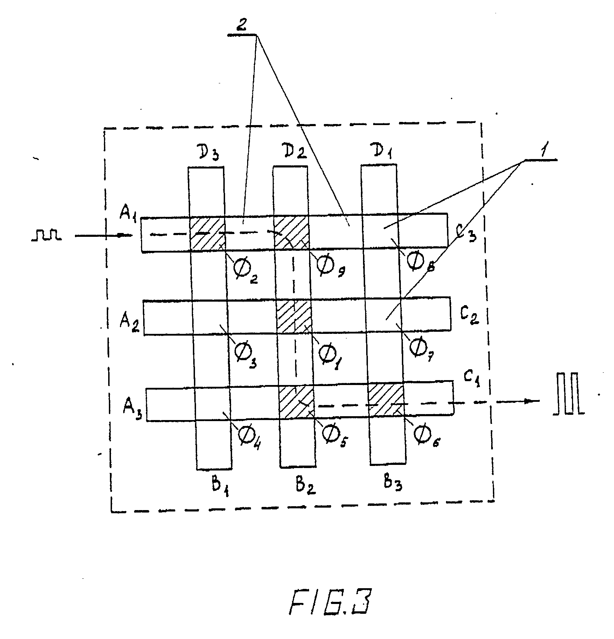

Die Integralvariante der Vorrichtung nach Fig. 2 wird mit Hilfe moderner technologischer Mikroelektronik und der Integraloptik gefertigt. Auf eine Unterlage werden Heterolaser 2 und ein hochohmiges nichtlineares optisches Element - der Phasenmodulator 1, der im selektiven Epitaxieverfahren gezüchtet werden kann, in Reihe formiert. Nach der Beendigung der Epitaxiezüchtung werden auf der Oberfläche an der Grenze zwischen den Sektionen im Interferenz-Fotoätz-Verfahren Breggowsche Spiegel gefertigt. Die Anschlüsse und Kontakte werden im obengenannten Verfahren hergestellt.

Bei der Herstellung der Vorrichtungen können Halbleiter der Gruppen $A^3B^5$, $A^2B^6$ zur Anwendung kommen. Die mittlere Sektion - ein nichtlinearer Phasenmodulator - kann aus beliebigem elektrooptischen Material (Halbleiter oder Dielektrik), das relativ gute nichtlineare Eigenschaften aufweist, sowie aus SEED-Moduln gefertigt werden.

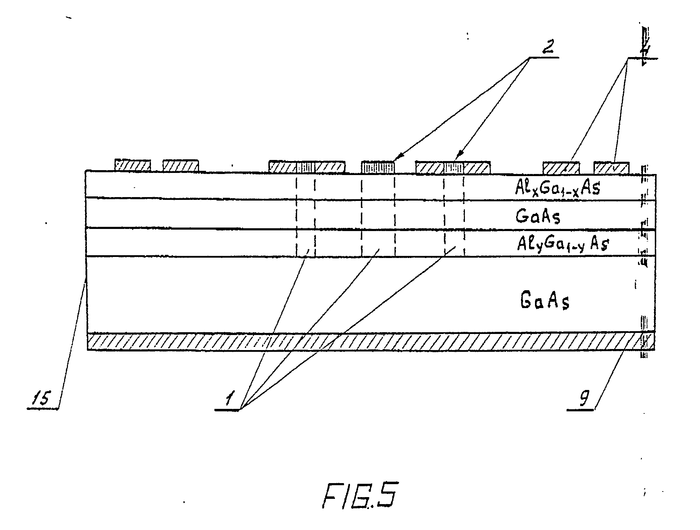

Zur Technologie der Herstellung des sternförmigen Kommutators gemäß Fig. 4: Die im herkömmlichen Verfahren hergestellten Haltleiterlaser 2 (zum Beispiel auf der Grundlage fester Dreikomponenten-Lösungen im System AlGaAs) mit Elektroden 5 werden mit Hilfe eines Lots (zum Beispiel auf Indiumbasis) auf einer elektrisch leitenden Unterlage 9 so befestigt, daß die Achsen der Spiegel jedes Laserpaares übereinstimmen und daß sie parallel sind. Der Phasenmodulator 1 (Fig. 5) aus beliebigem elektrooptischen Kristall (zum Beispiel aus GaAs) mit einer transparenten Elektrode an der Oberseite wird in der Mitte zwischen den Lasern auf die elekrisch leitende Unterlage 9 gesetzt. Zu den oberen Elektroden werden Anschlüsse gelötet. Der Gradan 11 wird mit Hilfe eines optischen Klebers mit seinem engen Ende (an der transparenten Elektrode[7] befestigt, während sein breiteres Ende an den optischen Leiter 10 angekoppelt wird. An die Ausgangsspiegel 4 der Laser 2 werden die Ausgangsfasern 14 angeklebt.

Die integraloptische Variante des sternförmiger Kommutators, der in Fig. 5 abgebildet ist, wird mit Hilfe von Methoden der Lithographie und der Ionenimplantation aus einem einheitlichen Plättchen der halbleitenden Laser-Heterostruktur 15 gefertigt, in der aktive Zonen der Laser gebildet werden. Die Breggowschen Spiegel werden im Interferenz-Ätz-Verfahren hergestellt. Der zentrale Teil, in den der Phasenmodulator 1 plaziert wird, wird geätzt. Die Vorrichtungen werden justiert und mit Hilfe von Lot auf der elektrisch leitenden Unterlage 9 befestigt.

Auf die obere Oberfläche des Halbleiterplättchens unter den Lasern und auf die obere Oberfläche des Phasenmodulators werden Mittels einer Maske elektrische Kontakte aufgebracht. Die Fasern, der Gradan und das Eingangskabel werden im obengenannten Verfahren befestigt.

Bei der Herstellung des sternförmigen Kommutators können Halbleiter der Gruppen $A^3B^5$, $A^2B^6$ zur Anwendung kommen. Die mittlere Sektion - ein nichtlinearer Phasenmodulator - kann aus beliebigem elektrooptischem Material (Halbleiter oder Dielektrik) gefertigt werden, das relativ gute nichtlineare Eigenschaften aufweist.

Bevorzugte Anwendungsbereiche der Erfindung sind lichtleitende Verbindungs- und Datenübertragungssysteme, Systeme der Integraloptik und der Rechentechnik.

**Ansprüche**

Kommutator optischer Kanäle mit Verstärkung optischer Signale, der m optische Ein- und n optische Ausgänge aufweist, dadurch gekennzeichnet, daß sie n Paare Halbleiterlaser (2), (mit n ≥ 1), die sich paarweise in jeweils einer optischen Achse befinden, und einen Phasenmodulator (1) mit transparenter Elektrode (7) an einem Ende aufweist, der an der Kreuzung der optischen Achse so plaziert ist, daß die Innenspiegel (3) dieser Laserpaare gemeinsam mit dem Phasenmodulator (1) n nichtlineare Fabry-Perot-Interfertometer (12) bilden, die Steuerfunktionen erfüllen, während die äußeren Spiegel (4) äußere steuerbare Resonatoren (13) definieren, wobei die Transmissionskoeffizienten $T_{innen}$ der inneren Spiegel (3) und $T_{außen}$ der äußeren Spiegel (4) der Bedingung $T_{innen} \geq T_{außen}$ genügen.

FIG.1

FIG.2

FIG.3

FIG.4

FIG.5

FIG.6